# FASCICULE DE BREVET EUROPEEN

(11) **EP 3 143 628 B1**
(45) Date de publication et mention de la délivrance du brevet: **22.07.2020**
(21) Numéro de dépôt: 15725781.7
(22) Date de dépôt: 22.04.2015
(51) Int. Cl.: H01B 9/06, H01B 7/282, H01B 7/14

(54) **CÂBLE DE TRANSPORT D'ÉLECTRICITÉ A ISOLATION DE PAPIER IMPRÉGNÉE DE MASSE**
ELEKTRIZITÄTSTRANSPORTKABEL MIT MASSENIMPRÄGNIERTER PAPIERISOLIERUNG
ELECTRICITY TRANSPORT CABLE WITH MASS IMPREGNATED PAPER INSULATION

(30) Priorité: 16.05.2014 FR 1454375
(43) Date de publication de la demande: 22.03.2017
(73) Titulaire: Nexans, 92400 Courbevoie (FR)
(72) Inventeur: SAUGRAIN, Jean-Maxime, 78110 Le Vesinet (FR); KAYOUN, Pierre, 92100 Boulogne-Billancourt (FR); MIREBEAU, Pierre, 91140 Villebon sur Yvette (FR)
(74) Mandataire: Feray, Valérie
(86) Numéro de dépôt international: PCT/FR2015/051092
(87) Numéro de publication internationale: WO 2015/173486

(56) Documents cités:
- EP-A1- 0 933 786
- DE-A1- 2 345 743
- DE-C- 904 301
- GB-A- 547 470

## Description

L'invention concerne un câble de transport d'électricité à isolation de papier imprégné de masse.

Les câbles isolés au papier avec gaine de plomb servent à la distribution d'énergie et aux usages industriels. Ils se posent à découvert, dans des conduits souterrains ou en pleine terre et sont également utilisés en application sous-marine.

On utilise des papiers de différentes épaisseurs allant de 50 à 200 µm, avec une densité de 650 à 1000 kg/m³. Etant donné que la densité intrinsèque des fibres est de l'ordre de 1500 kg/m³, l'espace libre entre elles doit être rempli d'éléments d'imprégnation par une sorte de cire dite « masse ». Cette dernière possède la propriété intéressante d'être fluide à une température de 120 °C ce qui lui confère d'excellentes propriétés d'imprégnation, et de se transformer, jusqu'à la température maximale de service, en une masse hautement visqueuse.

On peut aussi, en variante, utiliser à la place du papier un complexe de papier, de polypropylène laminé et de papier.

Afin de prévenir l'infiltration d'eau, on applique une gaine en alliage de plomb extrudée d'une épaisseur supérieure à 2,5 mm autour de l'isolation en papier imprégné qui a, quant à elle, une épaisseur comprise entre 15 et 20 mm. Une gaine extérieure peut être en PVC ou en PE. Selon l'utilisation du câble, une armure longitudinale peut également être installée.

Ce type de câble dit à « isolation de papier imprégné de masse » est bien adapté aux grandes profondeurs terrestres ou sous-marines.

En tension continue, l'activité dans les cavités et autres défauts apparaissant dans le papier est réduite et cela permet d'employer les câbles à papier imprégné de masse même pour de hautes tensions.

Ceci étant, le plomb est relativement lourd ce qui est préjudiciable à l'utilisation de tels câbles sous-marins et il constitue un risque pour l'environnement et pour la santé des populations, particulièrement lors de l'utilisation de tels câbles terrestres.

Les documents de brevet DE 904 301 et GB 1 191 782 décrivent un câble de transport d'électricité à isolation de papier imprégnée de masse comprenant autour d'au moins un conducteur, une couche de papier imprégné et une couche métallique adjacente à ladite couche de papier imprégné, cette couche métallique étant constituée d'aluminium.

Le document de brevet GB 547 470 décrit un câble de transport d'électricité à isolation de papier imprégnée de masse comprenant autour d'au moins un conducteur, une couche de papier imprégné et une couche métallique adjacente à ladite couche de papier imprégné, cette couche métallique étant constituée de cuivre.

L'invention propose un perfectionnement à ce type de câble et, pour ce faire, elle concerne un câble de transport d'électricité à isolation de papier imprégnée de masse comprenant autour d'au moins un conducteur, une couche de papier imprégné, une couche métallique adjacente à ladite couche de papier imprégné, cette couche métallique étant constituée de cuivre ou d'aluminium, et, autour de ladite couche métallique, un couche de renforcement transversale, caractérisé en ce qu'il comprend, directement autour de ladite couche métallique, une couche de matière isolante et, directement autour de ladite couche de matière isolante, ladite couche de renforcement transversale en acier ou en ruban de fibre de verre.

De par leur ductilité, le cuivre recuit de type électrique et l'aluminium pur peuvent avantageusement remplacer le plomb, suite aux modifications de volume de la couche de papier imprégné selon les températures.

La couche de renforcement transversale assure un effet ressort de par son élasticité, afin de renforcer la tenue mécanique lors de la dilatation ou de la contraction de la couche de papier imprégné.

Selon un mode de réalisation préféré, ladite couche de matière isolante est contrecollée sur ladite couche métallique.

Il est ainsi évité une fatigue rapide de ladite bande soudée.

De préférence, ladite couche métallique présente une épaisseur comprise entre 0,6 et 1,5 mm.

Outre le fait que le cuivre et l'aluminium présentent une masse volumique inférieure à celle du plomb, il s'avère que l'épaisseur de la couche de cuivre ou d'aluminium peut être considérablement inférieure à celle d'une couche de plomb connu. Il en résulte un gain de poids important de l'ordre de 10 kg par mètre linéaire de câble.

Selon un mode de réalisation, ladite couche est constituée d'une bande enroulée sous forme d'un cylindre autour dudit conducteur et soudée longitudinalement.

De préférence, ladite bande est soudée selon une génératrice dudit cylindre.

De préférence, ladite couche de matière isolante est en polyéthylène contrecollée au moyen d'une couche de polyoléfine à ladite couche métallique.

Avantageusement, ladite couche de renforcement transversale présente une épaisseur comprise entre 0,1 et 1 mm.

Un tel câble est de préférence destiné à de hautes tensions continues.

L'invention est décrite ci-après plus en détail à l'aide d'une figure ne représentant qu'un mode de réalisation préféré de l'invention.

Cette figure est une vue en coupe transversale d'un câble conforme à l'invention, particulièrement destiné à une utilisation sous-marine.

Un câble de transport d'électricité à isolation de papier imprégné de masse, particulièrement destiné à une utilisation sous-marine, comporte autour d'au moins un conducteur 1, ici constitué d'un conducteur cylindrique central et de conducteurs de section trapézoïdale, un système d'isolation à papier imprégné 2 constitué de papiers semi-conducteurs internes, de papiers isolants et de papiers semi-conducteurs externes, et une couche métallique 3.

Autour de cette couche métallique 3, il comprend également une couche de matière isolante 4, de préférence en polyéthylène haute densité et d'une épaisseur de 3 à 6 mm, contre-collée à la couche métallique 3, une couche de renforcement transversal 5, présentant une limite élastique comprise entre 20.10⁶ N à 100.10⁶ N par mètre de longueur de câble, et une gaine externe 7.

Cette couche de renforcement transversal 5, d'une épaisseur comprise entre 0,1 et 1 mm, présente un module de traction supérieur à celui de la couche métallique 3 et un domaine élastique tel qu'elle est capable d'absorber les variations de volume de la masse isolante dans le domaine de fonctionnement du câble en température, ainsi que des contraintes de manutention par exemple des contraintes de lovage.

Cette couche de renforcement transversal 5 est de préférence en acier et est enrubannée sur la couche de matière isolante 4. Elle présente de préférence une épaisseur sensiblement égale à 0,2 mm.

Avantageusement, on choisit un acier de 400 MPa à 700 MPa.

Elle peut également être en ruban de fibre de verre de type R ou S et présenter une épaisseur sensiblement égale à 1 mm.

Le contre-collage de la couche de matière isolante 4 est réalisé par une fine couche de polymère, de préférence de polyoléfine, fonctionnalisé comportant des groupes polaires pendants qui est co-extrudée avec la couche de matière isolante 4.

Dans le cas d'une application sous marine, on dispose également une armure résistant à la traction constituée de fils métalliques longitudinaux 6, de préférence en acier.

Cette couche métallique 3 entourant la couche de papier imprégné est constituée de cuivre ou d'aluminium et est d'une épaisseur comprise entre 0,6 et 1,5 mm.

Cette couche métallique est constituée d'une bande enroulée sous forme d'un cylindre autour du conducteur 1 et soudée longitudinalement selon une génératrice du cylindre, par un joint de soudure 8 réalisé par soudage laser ou TIG (acronyme de « Tungsten Inert Gas »).

Un tel câble est destiné à de hautes tensions continues.

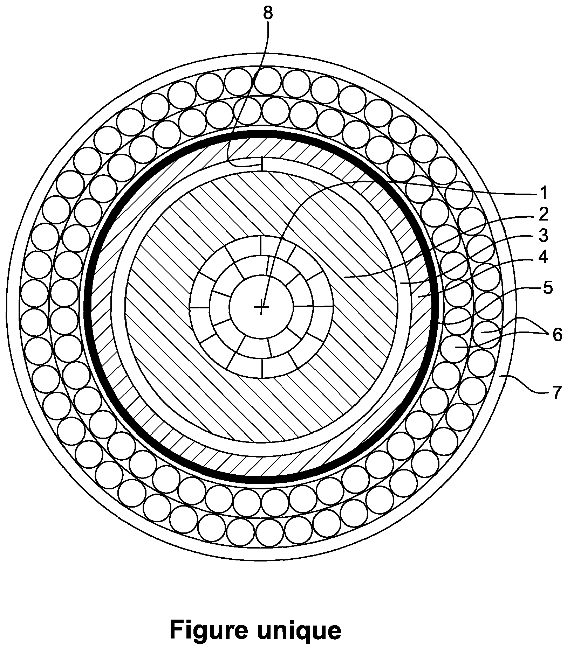

## Revendications

1. Câble de transport d'électricité à isolation de papier imprégnée de masse comprenant autour d'au moins un conducteur (1), une couche de papier imprégné (2), une couche métallique (3) adjacente à ladite couche de papier imprégné, cette couche métallique (3) étant constituée de cuivre ou d'aluminium, et, autour de ladite couche métallique (3), une couche de renforcement transversale, **caractérisé en ce qu'**il comprend, directement autour de ladite couche métallique (3), une couche de matière isolante (4) et, directement autour de ladite couche de matière isolante (4), ladite couche de renforcement transversale (5) en acier ou en ruban de fibre de verre.

2. Câble selon la revendication 1, **caractérisé en ce que** ladite couche de matière isolante (4) est contrecollée sur ladite couche métallique (3).

3. Câble selon la revendication 1 ou 2, **caractérisé en ce que** ladite couche métallique (3) présente une épaisseur comprise entre 0,6 et 1,5 mm.

4. Câble selon l'une des revendications précédentes, **caractérisé en ce que** ladite couche métallique (3) est constituée d'une bande enroulée sous forme d'un cylindre autour dudit conducteur (1) et soudée longitudinalement.

5. Câble selon la revendication précédente, **caractérisé en ce que** ladite bande est soudée selon une génératrice dudit cylindre.

6. Câble selon l'une des revendications précédentes, **caractérisé en ce que** ladite couche de matière isolante (4) est en polyéthylène contrecollée au moyen d'une couche de polyoléfine à ladite couche métallique (3).

7. Câble selon l'une des revendications précédentes, **caractérisé en ce que** ladite couche de renforcement transversale (5) présente une épaisseur comprise entre 0,1 et 1 mm.

8. Câble selon l'une des revendications précédentes, destiné à de hautes tensions continues.

## Patentansprüche

1. Elektrizitätstransportkabel mit massenimprägnierter Papierisolierung, umfassend um mindestens einen Leiter (1) eine imprägnierte Papierschicht (2), eine Metallschicht (3), die der imprägnierten Papierschicht benachbart ist, wobei diese Metallschicht (3) aus Kupfer oder Aluminium besteht, und um die Metallschicht (3) eine Querverstärkungsschicht, **dadurch gekennzeichnet, dass** sie, direkt um die Metallschicht (3), eine Schicht aus isolierendem Material (4) und, direkt um die Schicht aus isolierendem Material (4), die Querverstärkungsschicht (5) aus Stahl oder aus Glasfaserstreifen umfasst.

2. Kabel nach Anspruch 1, **dadurch gekennzeichnet, dass** die Schicht aus isolierendem Material (4) auf der Metallschicht (3) kaschiert ist.

3. Kabel nach Anspruch 1 oder 2, **dadurch gekennzeichnet, dass** die Metallschicht (3) eine Dicke aufweist, die im Bereich zwischen 0,6 und 1,5 mm liegt.

4. Kabel nach einem der vorhergehenden Ansprüche, **dadurch gekennzeichnet, dass** die Metallschicht (3) aus einem Band besteht, das in Form eines Zylinders um den Leiter (1) gewickelt und der Länge nach geschweißt ist.

5. Kabel nach dem vorhergehenden Anspruch, **dadurch gekennzeichnet, dass** das Band gemäß einer Mantellinie des Zylinders geschweißt ist.

6. Kabel nach einem der vorhergehenden Ansprüche, **dadurch gekennzeichnet, dass** die Schicht aus isolierendem Material (4) aus Polyethylen ist, das mit Hilfe einer Schicht aus Polyolefin an die Metallschicht (3) kaschiert ist.

7. Kabel nach einem der vorhergehenden Ansprüche, **dadurch gekennzeichnet, dass** die Querverstärkungsschicht (5) eine Dicke aufweist, die im Bereich zwischen 0,1 und 1 mm liegt.

8. Kabel nach einem der vorhergehenden Ansprüche, das für hohe Gleichspannungen vorgesehen ist.

## Claims

1. An electricity transmission cable with mass-impregnated paper insulation comprising, around at least one conductor (1), a layer of impregnated paper (2), and a metal layer (3) adjacent to said layer of impregnated paper, this metal layer (3) being made from copper or aluminum, and, around said metal layer (3), a transverse reinforcing layer, **characterized in that** it comprises, directly around said metal layer (3), a layer of insulating material (4) and, directly around said layer of insulating material (4), said transverse reinforcing layer (5) made from steel or glass fiber tape.

2. The cable according to claim 1, **characterized in that** said layer of insulating material (4) is laminated on said metal layer (3).

3. The cable according to claim 1 or 2, **characterized in that** said metal layer (3) has a thickness of between 0.6 and 1.5 mm.

4. The cable according to one of the preceding claims, **characterized in that** said metal layer (3) is made up of a strip wound in the form of a cylinder around said conductor (1) and welded longitudinally.

5. The cable according to the preceding claim, **characterized in that** said strip is welded along a generatrix of said cylinder.

6. The cable according to one of the preceding claims, **characterized in that** said layer of insulating material (4) is made from polyethylene laminated using a layer of polyolefin to said metal layer (3).

7. The cable according to one of the preceding claims, **characterized in that** said transverse reinforcing layer (5) has a thickness of between 0.1 and 1 mm.

8. The cable according to one of the preceding claims, configured for DC high voltages.
